# EUROPÄISCHE PATENTSCHRIFT

(11) **EP 1 329 401 B1**
(45) Veröffentlichungstag und Bekanntmachung des Hinweises auf die Patenterteilung: **22.03.2006**
(21) Anmeldenummer: 03000194.5
(22) Anmeldetag: 07.01.2003
(51) Int. Cl.: B65G 57/24

(54) **Anordnung und Verfahren zum Abladen von Lagen aus blattförmigen Materialien zur Bildung eines Materialstapels**
Arrangement and method for unloading bundles of signatures to build a paperstack
Agencement et procédé pour décharger des lots de cahiers pour la formation d'une pile

(30) Priorität: 16.01.2002 DE 10201609
(43) Veröffentlichungstag der Anmeldung: 23.07.2003
(73) Patentinhaber: Baumann Maschinenbau Solms GmbH & Co. KG, 35606 Solms (DE)
(72) Erfinder: Assmann, Volkmar, 35768 Siegbach (DE); Schmitt, Berthold, 35638 Leun (DE)
(74) Vertreter: Schmidt, Ursula

(56) Entgegenhaltungen:
- EP-A- 1 061 029
- DE-U- 29 823 455
- US-A- 4 986 726

## Beschreibung

Die Erfindung betrifft eine Anordnung zum Abladen von Lagen aus blattförmigen Materialien zur Bildung eines Materialstapels, insbesondere zum Abladen von unterschiedlich bedruckten und/oder unterschiedliche Formate aufweisenden Papierstapeln aus einer Schneidanlage, im wesentlichen bestehend aus der Schneidanlage und einer Abladerstation, die einen höhenverstellbaren und horizontal verfahrbaren Abladertisch und wenigstens zwei variabel einstell- und feststellbare Anschläge aufweist.

Die Erfindung betrifft des weiteren ein Verfahren zum Abladen von Lagen aus blattförmigen Materialien zur Bildung eines Materialstapels, insbesondere zum wenigstens teilweise automatischen Abladen von unterschiedlich bedruckten und/oder unterschiedliche Formate aufweisenden Papierstapeln aus einer Schneidanlage nach dem Beschneiden, bei dem mittels des Abladertisches eines Abladers die auf dem Abladertisch fixierte Lage auf eine Abstapelpalette oder einen bereits darauf befindlichen Materialstapel abgesetzt, der Abladertisch unter der Lage entfernt.und die Fixierung gelöst wird und der Abladertisch wieder in Ausgangsstellung verbracht wird.

Abladerstationen sind in unterschiedlichen Ausführungen bereits bekannt. Jedoch ist es bisher nicht bekannt geworden, zum Beispiel Papierlagen, die aufgrund des Bedruckens der Sammelbögen mit unterschiedlichen Druckinhalten, in unterschiedlichen Formaten oder auch unterschiedlicher Form in verschiedene Nutzen zerschnitten werden, wenigstens teilweise automatisch und sortiert abzustapeln. Das Absetzen der Lagen zur Bildung eines Stapels auf unterschiedliche Abstapelpaletten wird in der Regel manuell ausgeführt.

Bekannte Ablader bestehen - wie beispielsweise EP1 061 029 A2 offenbart - im wesentlichen aus einem Ständer, an dem ein höhenverstellbarer und horizontal verfahrbarer Tisch angeordnet ist. Am Ständer sind des weiteren wenigstens zwei höhenverstellbare sowie horizontal verschiebbare Anschläge angeordnet, mit denen die aufgeschobene Lage in ihrer Position fixiert werden kann. Zum Abstapeln der Lage auf die Abstapelpalette verfährt der Abladertisch zunächst horizontal und vertikal direkt über die Abstapelpalette oder den bereits darauf angeordneten Materialstapel in vorgegebene Position. Anschließend wird der Abladertisch unter der Lage seitlich weggezogen, so dass die Lage genau positioniert auf der Abstapelpalette oder auf dem bereits darauf abgesetzten Stapel aufliegt. Der Abladertisch verfährt in Ausgangsposition, während die Anschläge gelöst und ebenfalls in Ausgangsposition gebracht werden. Die Anordnung der EP 1 061 029 A2 entspricht dem Oberbegriff des Anspruchs 1.

Mit dieserart Abladerstationen ist es jedoch nur möglich, Lagen gleicher Form und Größe sowie gleichen Druckinhalts automatisch abzuladen. Andere Lagen müssen zum Sortieren manuell abgeladen werden.

Es ist deshalb Aufgabe der Erfindung, eine Anordnung zum Abladen von Lagen aus blattförmigen Materialien zur Bildung eines Materialstapels zu schaffen, die es ermöglicht, wenigstens teilweise automatisch insbesondere ein sortiertes Abladen von Lagen unterschiedlichen Formats beziehungsweise Druckinhaltes zu realisieren, wobei sich der konstruktive und Kostenaufwand im üblichen Rahmen bewegen soll. Diese Aufgabe wird durch die Merkmale des Anspruchs 1 gelöst.

Es ist des weiteren Aufgabe der Erfindung, ein Verfahren zum Abladen von Lagen aus blattförmigen Materialien zur Bildung eines Materialstapels anzugeben, mit dem auf einfache Art und Weise und zeitsparend aus einer Schneidanlage die beschnittenen Lagen insbesondere unterschiedlichen Formats oder Druckinhalts sortiert und positionsgenau auf Abstapelpaletten abgelegt werden können. Diese weitere Aufgabe wird durch die Merkmale des Anspruchs 8 gelöst.

Mit der erfindungsgemäßen Anordnung wird ermöglicht, insbesondere Lagen, die durch Beschneidvorgänge von Sammelbögen in Einzelnutzen unterschiedlichen Formats und/oder unterschiedlichen Druckinhalts in einer Schneidanlage entstehen, zumindest teilweise automatisiert auf unterschiedliche Abstapelpaletten abzulegen.

Hierfür können bekannte Ablader eingesetzt werden, die zusätzlich horizontal verfahrbar ausgebildet sind. Lediglich das sortierte Verbringen der Nutzen von der Arbeitsfläche der Schneidanlage zum Zwischenlagern in das Sortierregal sowie das Aufschieben der Lage auf den Abladertisch wird noch manuell vom Bediener der Schneidanlage durchgeführt.

Das Abladen kann im wesentlichen ohne Stillstandszeiten der Schneidanlage und formatunabhängig erfolgen. Soll die Anordnung zum Abladen von Lagen gleichen Formats beziehungsweise Druckinhalts genutzt werden, wird ohne horizontales Verfahren der Abladestation entlang der Abstapelpaletten nur auf eine Abstapelpalette abgeladen.

Nach einer vorzugsweisen Ausführung der erfindungsgemäßen Anordnung sind die Aufnahmeböden des Sortierregals in einem Gestell paternosterartig umlaufend angeordnet.

Dabei ist jeder Abstapelpalette wenigstens ein Aufnahmeboden zugeordnet. Somit ist es möglich, zunächst eine Anzahl Nutzen sortiert zwischen zulagern und zu Lagen zu sammeln, bevor die Abladevorgänge erfolgen. Durch die Ausbildung der Aufnahmeböden als umlaufende Anordnung ist es zeitsparend möglich, den jeweils benötigten Aufnahmeboden in Arbeitsflächenhöhe beziehungsweise in Beladestellung zu bringen.

Nach einer anderen vorteilhaften Ausbildung des Sortierregals ist vorgesehen, dass die Aufnahmeböden des Sortierregals wenigstens bis in Höhe der Arbeitsfläche der Schneidanlage senkrecht und oberhalb der Arbeitsfläche sowohl vertikal als auch horizontal verfahrbar angeordnet sind.

Dabei verlaufen die Aufnahmeböden in am Gestell angeordneten Führungsbahnen, wobei die Führungsbahnen unterhalb der Arbeitsfläche senkrecht und oberhalb der Arbeitsfläche nach hinten abgewinkelt angeordnet sind.

Durch die abgewinkelte Anordnung der Führungsbahnen können die Aufnahmeböden, die sich oberhalb der Arbeitsfläche befinden, aus dem Bedienerbereich zurückgesetzt werden, so dass sie den Bediener der Schneidanlage beim Sortieren der Lagen in das Sortierregal nicht hinderlich sind. Verletzungsgefahren werden ebenfalls ausgeschlossen.

Wenn die Aufnahmeböden als Luftbretter ausgebildet sind, erleichtert sich das Einschieben der Lagen.

Aus konstruktiver und Kostensicht von Vorteil ist, wenn die Abladerstation auf einer Führungsschienenanordnung verfahrbar angeordnet ist.

Somit sind nur relativ wenig konstruktive Maßnahmen notwendig, ein automatisiertes, sortiertes Ablegen von Lagen auf verschiedene Abstapelpaletten zu ermöglichen, da vorhandene oder übliche Ablader eingesetzt und entsprechend umgerüstet werden können.

Bei einer weiteren vorzugsweisen Ausführung der erfindungsgemäßen Anordnung ist vorgesehen, dass vier Abstapelpaletten positionsgenau nebeneinander angeordnet sind.

Damit wird ein zeitoptimiertes Abladen ermöglicht. Diesen vier Abstapelpaletten sind wenigstens jeweils ein Aufnahmeboden des Sortierregals zugeordnet.

Mit den erfindungsgemäßen Verfahren wird es möglich, die Stillstandszeiten der Schneidanlage zu reduzieren und dem Bedienpersonal die Arbeit zu erleichtern, da nur noch in Höhe der Arbeitsfläche die Nutzen beziehungsweise Lagen verschoben werden müssen und alle weiteren Transportvorgänge automatisch erfolgen und vom Bedienpersonal nur noch gesteuert beziehungsweise überwacht werden müssen.

Nach einer vorteilhaften Ausführung des erfindungsgemäßen Verfahrens ist vorgesehen, dass das Abladen der Lagen in einer vorgegebenen Reihenfolge erfolgt, derart, dass jeweils beginnend mit der am weitesten von der Schneidanlage entfernt angeordneten Abstapelpalette nacheinander die Abstapelpaletten mit jeweils einer Lage beladen werden und dass anschließend dieser Abladezyklus beliebig oft wiederholt wird.

Das Festlegen der Reihenfolge ist notwendig, um den Abladeablauf zeitoptimiert durchführen zu können und um Fehler bei der Zuordnung der Lagen zu den jeweiligen Paletten zu vermeiden. Beschädigungen der abgeladenen Stapel können auch verhindert werden, da die Stapelhöhe jeweils von der am weitesten entfernt angeordneten Abstapelpalette aus vergrößert wird. Beim Verfahren des Abladetisches über die anderen Paletten ist daher immer genügend Abstand vorhanden.

Es ist erfindungsgemäß des weiteren möglich, dass das Abladen der Lagen in wenigstens eine der Abstapelpaletten erfolgt.

Damit kann die Abladestation auch als übliche Abladestation genutzt werden, wenn sie zum Abladen von Lagen gleichen Inhalt oder Formats genutzt werden soll. Sie kann ebenso eingesetzt werden, wenn weniger verschiedene Sorten von Lagen, als Abstapelpaletten vorhanden sind, sortiert abgestapelt werden sollen.

Die Erfindung soll nachfolgend anhand eines Ausführungsbeispieles näher erläutert werden. Die Zeichnung zeigt dabei in
Fig.1 die Draufsicht auf eine Schneidanlage mit Abladerstation und Sortierregal sowie vier Abstapelpaletten in prinzipieller Darstellung,
Fig. 2 einen Schnitt A-A nach Fig. 1,
Fig. 3 eine prinzipielle Darstellung eines erfindungsgemäßen Sortierregals in Ausgangsstellung und
Fig.4 das Sortierregal nach Fig. 3 im befüllten Zustand.

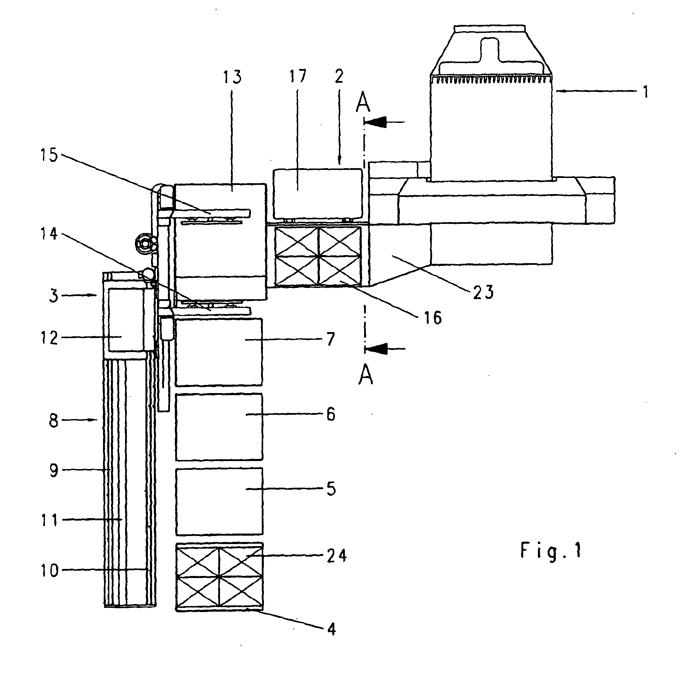

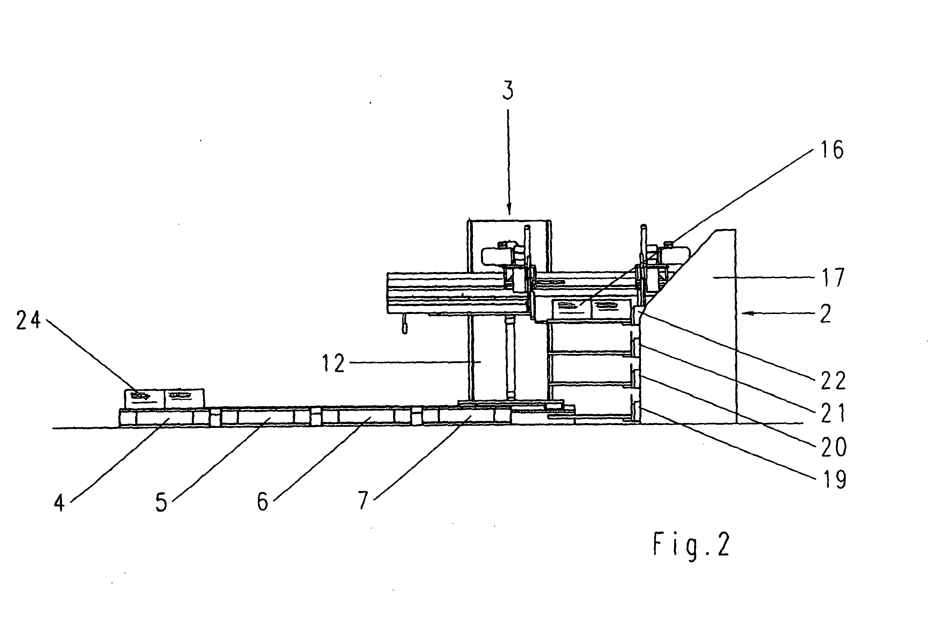

Nach den Figuren 1 und 2 besteht die Anordnung zum Abladen von Lagen aus blattförmigen Materialien zur Bildung eines Materialstapels aus der Schneidanlage 1, dem daneben angeordneten Sortierregal 2, der Abladerstation 3 und vier Abstapelpaletten 4 bis 7, die nebeneinander genau positioniert angeordnet sind. Zur genauen Positionierung der Abstapelpaletten 4 bis 7 sind beidseitig angeordnete Anschläge vorgesehen, die in der Zeichnung jedoch nicht dargestellt sind.

Aus Fig. 1 ist ersichtlich, dass entlang der Abstapelpalettenreihe 4 bis 7 die Führungsschienenanordnung 8 der Abladerstation 3 verläuft, die im wesentlichen aus den Führungsschienen 9, 10 und dem Zahnriemen 11 besteht, auf der die Abladerstation 3 horizontal verfahrbar ist.

Die Abladerstation 3 weist ansonsten einen üblichen konstruktiven Aufbau auf und besteht - wie aus den Fig. 1 und 2 ersichtlich - im wesentlichen aus einem Ständer 12, an dem der Abladertisch 13 höhenverstellbar und horizontal verfahrbar angeordnet ist. Des weiteren sind am Ständer 12 zwei Anschläge 14 und 15 befestigt, die der Positionierung der Lagen 16 und deren Fixierung während der Abladevorgänge dienen. Sie sind sowohl höhenverstellbar als auch horizontal verschiebbar ausgebildet. Die Steuerung der Abladerstation 3 geschieht durch das Bedienpersonal von der Schneidanlage 1 aus.

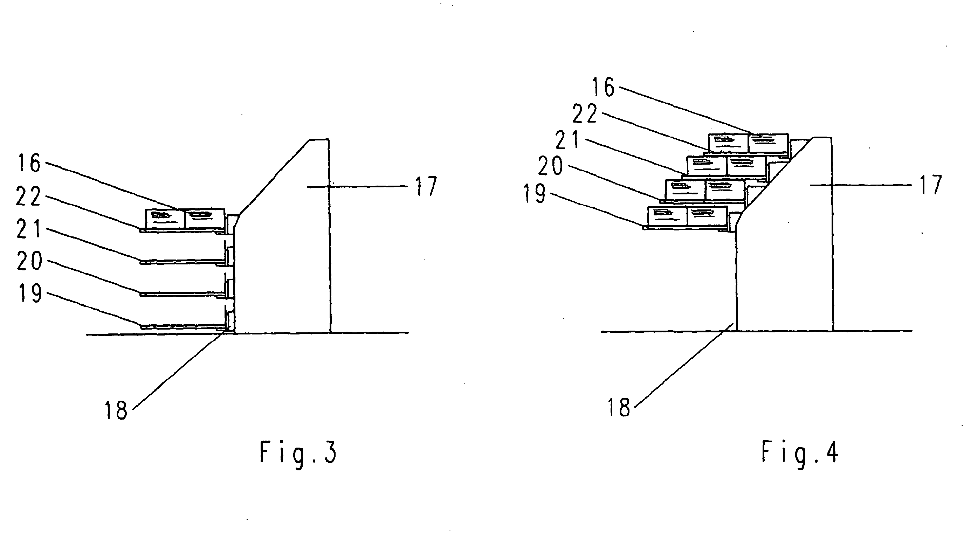

Das Sortierregal 2 besteht im wesentlichen aus dem Gestell 17, an dem Führungsbahnen 18 - in den Figuren 3 und 4 andeutungsweise dargestellt - angeordnet sind. In den Führungsbahnen sind entsprechend ausgebildete, in der Zeichnung nicht dargestellte, verfahrbare Aufnahme- und Befestigungselemente angeordnet, auf denen die Aufnahmeböden 19 bis 22 befestigt sind. Die Aufnahmeböden 19 bis 22 sind zur besseren Handhabung der Lagen 16 als Lufttische ausgebildet.

Das Gestell 17 des Sortierregals weist oberhalb der Arbeitsfläche 22 der Schneidanlage 1 einen von der Bedienerseite aus nach hinten abgeschrägten Bereich auf. Die Führungsbahnen verlaufen in diesem Bereich ebenfalls schräg nach hinten, so dass die Aufnahmeböden 19 bis 22 in diesem Bereich aus dem Bedienerbereich weggeführt werden. Damit wird vermieden, dass das Bedienpersonal von beladenen Aufnahmeböden 19 bis 21 während der Sortiervorgänge behindert wird. Das Auflegen der jeweiligen Nutzen ist uneingeschränkt auf jeden der Aufnahmeböden 19 bis 22 möglich.

Im Ausführungsbeispiel sind jeder Abstapelpalette 4 bis 7 ein Aufnahmeboden 19 bis 22 zugeordnet, in der Weise, dass der Abstapelpalette 4, die am weitesten von der Schneidanlage 1 entfernt ist, der Aufnahmeboden 19 zu geordnet ist, der im gefüllten Zustand des Sortierregals in Arbeitsflächenhöhe angeordnet ist und somit bei jedem Abladezyklus als erster bedient werden kann. Abstapelpalette 5 ist dem Aufnahmeboden 20, Abstapelpalette 6, dem Aufnahmeboden 21 und Abstapelpalette 7, die dicht neben der Schneidanlage 1 angeordnet ist, dem Aufnahmeboden 22 zugeordnet, der sich im befüllten Zustand des Sortierregals am weitesten außerhalb des Bedienbereiches befindet. So wird erreicht, dass die Lagen 16, die auf jedem Aufnahmeboden 19 bis 22 ein unterschiedliches Format und/oder einen unterschiedlichen Druckinhalt aufweisen können, stets auf der gleichen Abstapelpalette 4 bis 7 abgeladen werden.

Der Verfahrensablauf ist folgender:

Die auf den Sammelbögen aufgedruckten Einzelnutzen, die in Form und/oder Druckinhalt unterschiedlich sind, werden wie üblich in die Einzelnutzen zerschnitten. Hierfür sind in der Regel mehrere Schneidvorgänge notwendig. Sind die Einzelnutzen hergestellt, werden diese vom Bedienpersonal so in das Sortierregal geschoben, dass jeweils gleiche Einzelnutzen dem gleichen Aufnahmeboden 19 bis 22 zugeordnet werden, das heißt, die Aufnahmeböden 19 bis 22 werden jeweils entlang der Führungsbahnen 18 bewegt, so dass der gerade benötigte Aufnahmeboden 19 bis 22 in Arbeitsflächenhöhe an dieser anliegt. Diese Vorgänge werden so lange fortgesetzt, bis wenigstens aus einer Sorte Einzelnutzen eine Lage 16 gebildet ist oder das Sortierregal 2 gefüllt ist.

Die Bedienperson schiebt nun jeweils eine Lage 16 in der bereits beschriebenen Reihenfolge auf den Abladertisch 13 der Abladerstation 3 und legt ihn am Anschlag 14, der sich in Anlegeposition befindet, an. Die Abladerstation 3 fährt in Richtung der zum Abladen vorgesehenen Abstapelpalette 4 bis 7, beispielsweise in Richtung der Abstapelpalette 4. Gleichzeitig wird Anschlag 15 durch vertikales und horizontales Verschieben an der, dem Anschlag 14 gegenüberliegenden Seite der Lage 16 so positioniert, dass die Lage 16 zwischen beiden Anschlägen 14 und 15 klemmt.

Parallel dazu bewegt sich der Abladertisch 13 durch vertikale und horizontale Bewegungsabläufe in genaue Abstapelposition unmittelbar über die Abstapelpalette 4 beziehungsweise über den bereits darauf abgelegten Materialstapel 24. Durch seitliches horizontales Bewegen des Abladertisches 13, wird dieser unter der Lage 16 hervorgezogen und in Ausgangsstellung verfahren. Die Lage 16 liegt auf der Abstapelpalette 4 oder den darauf bereits befindlichen Materialstapel 24 auf. Die Fixierung wird gelöst, das heißt, die Anschläge 14, 15 werden vertikal und horizontal bewegt. Anschließend verfährt die Abladerstation 3 zurück in Ausgangsposition und der Abladevorgang wird erneut ausgelöst.

Ein Abstapelzyklus ist dann beendet, wenn nacheinander, beginnend mit der am weitesten von der Schneidanlage entfernt angeordnete Abstapelpalette 4, auf alle vier Abstapelpaletten 4 bis 7 eine entsprechende Lage 16 abgelegt worden ist.
Sind die einzelnen Lagensorten in unterschiedlicher Anzahl vorhanden, wird das Sortierregal 2 nur soweit geleert, bis wenigstens einer der Aufnahmeböden 19 bis 22 geleert ist. Danach erfolgt das erneute Befüllen des Sortierregals 2.

Es ist auch möglich, auf eine der Abstapelpaletten 4 bis 7 einzeln abzuladen. Aus Zeitgründen sollte hierfür die Abstapelpalette 7 genutzt werden, die direkt neben der Schneidanlage 1 angeordnet ist. Je nach Anzahl unterschiedlicher vorhandener Lagensorten 16 ist es des weiteren möglich, nur zwei oder drei der vorhandenen vier Abstapelpaletten 4 bis 7 zu nutzen.

Ist eine Abstapelpalette 4 bis 7 gefüllt, kann sie auf einfache Art und Weise durch eine leere Abstapelpalette 4 bis 7 ersetzt werden, da die genaue Position der Abstapelpaletten 4 bis 7 durch Anschläge vorgegeben ist.

### Bezugszeichenliste

- 1: Schneidanlage
- 2: Sortierregal
- 3: Abladerstation
- 4 bis 7: Abstapelpaletten
- 8: Führungsschienenanordnung
- 9, 10: Führungsschienen
- 11: Zahnriemen
- 12: Ständer
- 13: Abladertisch
- 14, 15: Anschläge
- 16: Lage
- 17: Gestell
- 18: Führungsbahn
- 19 bis 22: Aufnahmeböden
- 23: Arbeitsfläche
- 24: Materialstapel

## Patentansprüche

1. Anordnung zum Abladen von unterschiedlich bedruckten und/oder unterschiedliche Formate aufweisenden Stapeln aus blattförmigen Materialian bestehend aus einer Schneidanlage (1) zum Beschnerden der Stapel und einer Abladerstation (3), die einen höhenverstellbaren und horizontal verfahrbaren Abladertisch (13) zum Abladen von aus Stapel ausgebildeten Lagen (16) und wenigstens zwei variabel einstell- und feststellbare Anschläge (14,15) aufweist, **dadurch gekennzeichnet, dass** zum Zwischenlagern der Lagen (16) ein Sortierregal (2) mit verfahrbaren Aufnahmeböden (19 - 22) zwischen der Schneidanlage (1) und der Abladerstation (3) zum Ausbilden von Lagen (16) aus einer gleichen Sorte Stapel angeordnet ist und dass die Abladerstation (3) entlang einer Reihe Abstapelpaletten (4 - 7) verfahrbar ausgebildet ist.

2. Anordnung nach Anspruch 1, **dadurch gekennzeichnet, dass** die Aufnahmeböden (19-22) des Sortierregals (2) in einem Gestell paternosterartig umlaufend angeordnet sind.

3. Anordnung nach Anspruch 1, **dadurch gekennzeichnet, dass** die Aufnahmeböden (19-22) des Sortierregals (2) wenigstens bis in Höhe der Arbeitsfläche (23) der Schneidanlage (1) senkrecht und oberhalb der Arbeitsfläche (23) sowohl vertikal als auch horizontal verfahrbar angeordnet sind.

4. Anordnung nach der Ansprüche 2 und 3, **dadurch gekennzeichnet, dass** die Aufnahmeböden (19-22) in am Gestell (17) angeordneten Führungsbahnen (18) verlaufen, wobei die Führungsbahnen (18) unterhalb der Arbeitsfläche (23) senkrecht und oberhalb der Arbeitsfläche (23) aus dem Bedienbereich schräg nach hinten abgewinkelt verlaufen.

5. Anordnung nach einem der Ansprüche 1 bis 4, **dadurch gekennzeichnet, dass** die Aufnahmeböden (19-22) als Luftbretter ausgebildet sind.

6. Anordnung nach einem der Ansprüche 1 bis 5, **dadurch gekennzeichnet, dass** die Abladerstation (3) auf einer Führungsschienenanordnung (8) verfahrbar angeordnet ist.

7. Anordnung nach einem der Ansprüche 1 bis 6, **dadurch gekennzeichnet, dass** vier Abstapelpaletten (4-7) positionsgenau nebeneinander angeordnet sind.

8. Verfahren zum wenigstens teilweise automatischen Abladen von unterschiedlich bedruckten und/oder unterschiedliche Formate aufweisenden Stapeln aus blattförmigen Materialien bei dem die Stapel in einer Schneidanlage (1) beschnitten werden, und bei dem mittels des Abladertisches (13) einer Abladerstation (3) eine auf dem Abladertisch (13) fixierte Lage (16) von Stapeln auf eine Abstapelpalette (4-7) oder einen bereits darauf befindlichen Materialstapel (24) abgesetzt, der Abladertisch (13) unter der Lage entfernt und die Fixierung gelöst wird und der Abladertisch (13) wieder in Ausgangsstellung verbracht wird, **dadurch gekennzeichnet, dass** das Abladen der Lagen (16) **dadurch** sortiert erfolgt, dass zunächst die beschnittenen Stapel manuell auf Aufnahmeböden (19-22) eines Sortierregals (2), nach Druckinhalt oder Format geordnet, abgelegt werden, bis wenigstens aus Stapeln einer gleichen Sorte eine Lage (16) entstanden ist, dass danach eine Lage (16) auf den Abladertisch (13) einer Abladerstation (3) geschoben und dort fixiert wird, durch horizontales Verfahren der Abladerstation (3) entlang wenigstens einer der in einer Reihe angeordneten Abstapelpaletten (4-7) in vorgegebene Position zu der für diese Lage vorgesehenen Abstapelpalette (4-7) verbracht und/oder durch horizontale und vertikale Bewegungsabläufe des Abladertisches (13) dieser in Abstapelposition über die Abstapelpalette (4-7) bewegt wird und dass nach dem Abladen der Lage (16) die Abladerstation (3) und/oder der Abladertisch (13) wieder in Ausgangsposition verfährt.

9. Verfahren nach Anspruch 8, **dadurch gekennzeichnet, dass** das Abladen der Lagen (16) in einer vorgegebenen Reihenfolge erfolgt, derart, dass jeweils beginnend mit der am weitesten von der Schneidanlage (1) entfernt angeordneten Abstapelpalette (4) nacheinander die Abstapelpaletten (5-7) mit jeweils einer Lage beladen werden und dass anschließend dieser Abladezyklus beliebig oft wiederholt wird.

10. Verfahren nach Anspruch 8, **dadurch gekennzeichnet, dass** das Abladen der Lagen (16) in wenigstens eine der Abstapelpaletten (4 - 7) erfolgt.

## Claims

1. Arrangement for unloading stacks of sheetlike materials which are printed differently and/or have different formats, consisting of a cutting unit (1) for cutting the stacks and of an unloading station (3) which comprises a height-adjustable and horizontally movable unloading table (13) for unloading layers (16) formed from stacks and at least two variably adjustable and lockable stops (14, 15), **characterized in that**, for the purpose of buffer storing the layers (16), a sorting rack (2) having movable shelves (19-22) is arranged between the cutting unit (1) and the unloading station (3) for forming layers (16) from a common stack type, and **in that** the unloading station (3) is designed to be movable along a row of destacking pallets (4-7).

2. Arrangement according to Claim 1, **characterized in that** the shelves (19-22) of the sorting rack (2) are arranged to circulate in a frame in a paternoster-like manner.

3. Arrangement according to Claim 1, **characterized in that** the shelves (19-22) of the sorting rack (2) are arranged so that they can be moved both vertically and horizontally to at least the level of the working surface (23) of the cutting unit (1), perpendicularly and above the working surface (23).

4. Arrangement according to Claims 2 and 3,
**characterized in that** the shelves (19-22) extend in guideways (18) arranged on the frame (17), the guideways (18) below the working surface (23) extending perpendicularly and above the working surface (23), being angled off obliquely towards the rear from the operating region.

5. Arrangement according to one of Claims 1 to 4, **characterized in that** the shelves (19-22) are designed as pneumatic trays.

6. Arrangement according to one of Claims 1 to 5, **characterized in that** the unloading station (3) is arranged so that it can move on a guide rail arrangement (8).

7. Arrangement according to one of Claims 1 to 6, **characterized in that** four destacking pallets (4-7) are arranged next to one another in a positionally accurate manner.

8. Method for the at least partial automatic unloading of stacks of sheetlike materials which are printed differently and/or have different formats, in which the stacks are cut in a cutting unit (1) and in which the unloading table (13) of an unloading station (3) is used to deposit a layer (16) of stacks which is fixed on the unloading table (13) onto a destacking pallet (4-7) or onto a material stack (24) already situated thereon, the unloading table (13) is removed from under the layer, the fixing arrangement is released and the unloading table (13) is brought back into the starting position, **characterized in that** the layers (16) are unloaded in a sorted manner **in that** first of all the cut stacks are set down manually onto shelves (19-22) of a sorting rack (2), according to printed content or format, until a layer (16) has been created at least from stacks of a common type, **in that** subsequently a layer (16) is pushed onto the unloading table (13) of an unloading station (3) and fixed there, is brought into a predetermined position with respect to the destacking pallet (4-7) intended for this layer by horizontally moving the unloading station (3) along at least one of the destacking pallets (4-7) arranged in a row and/or the unloading table (13) is moved into the destacking position over the destacking pallet (4-7) by horizontal and vertical movement sequences of this unloading table, and **in that** after the layer (16) has been unloaded the unloading station (3) and/or the unloading table (13) is or are moved back into the starting position.

9. Method according to Claim 8, **characterized in that** the layers (16) are unloaded in a predetermined sequence such that, starting in each case with the destacking pallet (4) arranged furthest away from the cutting unit (1), the destacking pallets (5-7) are successively loaded with a respective layer, and **in that** this unloading cycle is subsequently repeated as often as desired.

10. Method according to Claim 8, **characterized in that** the layers (16) are unloaded into at least one of the destacking pallets (4-7).

## Revendications

1. Agencement pour décharger des piles de matériaux en feuille imprimées différemment et/ou présentant différents formats, se composant d'une installation de coupe (1) pour découper la pile et d'un poste de déchargement (3), qui présente une table de déchargement (13) réglable en hauteur et déplaçable horizontalement pour décharger des couches (16) formées de piles et au moins deux butées (14, 15) pouvant être réglées et fixées de manière variable, **caractérisé en ce que** pour le stockage intermédiaire des couches (16), un rayonnage de tri (2) est disposé avec des fonds de réception déplaçables (19 à 22) entre l'installation de coupe (1) et le poste de déchargement (3) pour constituer des couches (16) formées d'un même type de pile et **en ce que** le poste de déchargement (3) est réalisé de manière déplaçable le long d'une rangée de palettes de désempilage (4 à 7).

2. Agencement selon la revendication 1, **caractérisé en ce que** les fonds de réception (19 à 22) du rayonnage de tri (2) sont disposés en circulation en pater-noster dans un bâti.

3. Agencement selon la revendication 1, **caractérisé en ce que** les fonds de réception (19 à 22) du rayonnage de tri (2) sont disposés de manière déplaçable perpendiculairement au moins jusqu'à la hauteur de la surface de travail (23) de l'installation de coupe (1) et à la fois verticalement et horizontalement au-dessus de la surface de travail (23).

4. Agencement selon les revendications 2 et 3, **caractérisé en ce que** les fonds de réception (19 à 22) s'étendent dans des pistes de guidage (18) disposées sur le bâti (17), les pistes de guidage (18) s'étendant perpendiculairement en dessous de la surface de travail (23) et de manière coudée obliquement vers l'arrière depuis la zone d'utilisation au-dessus de la surface de travail (23).

5. Agencement selon l'une quelconque des revendications 1 à 4, **caractérisé en ce que** les fonds de réception (19 à 22) sont réalisés sous la forme de planches à flux d'air.

6. Agencement selon l'une quelconque des revendications 1 à 5, **caractérisé en ce que** le poste de déchargement (3) est disposé de manière déplaçable sur un agencement de rails de guidage (8).

7. Agencement selon l'une quelconque des revendications 1 à 6, **caractérisé en ce que** quatre palettes de désempilage (4 à 7) sont disposées précisément les unes à côté des autres.

8. Procédé pour décharger au moins partiellement automatiquement des piles de matériaux en feuille imprimées différemment et/ou présentant différents formats, dans lequel les piles sont coupées au niveau d'une installation de coupe (1) et dans lequel, au moyen de la table de déchargement (13) d'un poste de déchargement (3), une couche (16) de piles fixée sur la table de déchargement (13) est déposée sur une palette de désempilage (4 à 7) ou une pile de matériau (24) se trouvant déjà dessus, la table de déchargement (13) étant retirée du dessous de la couche et la fixation étant desserrée et la table de déchargement (13) étant ramenée dans sa position de départ, **caractérisé en ce que** le déchargement des couches (16) s'effectue de façon triée de telle sorte que d'abord les piles découpées soient déposées manuellement sur les fonds de réception (19 à 22) d'un rayonnage de tri (2), ordonnés suivant le contenu de l'impression ou suivant le format, jusqu'à ce qu'au moins une couche (16) soit formée à partir de piles d'un même type, **en ce qu'**après une couche (16) est poussée sur la table de déchargement (13) d'un poste de déchargement (3) et y est fixée, est amenée dans une position prédéfinie par déplacement horizontal du poste de déchargement (3) le long d'au moins une des palettes de désempilage (4 à 7) disposées en rangée et/ou est déplacée dans la position de désempilage par le biais de la palette de désempilage (4 à 7) par des déroulements de mouvements horizontaux et verticaux de la table de déchargement (13), et **en ce qu'**après le déchargement de la couche (16), le poste de déchargement (3) et/ou la table de déchargement (13) sont à nouveau déplacés dans la position de départ.

9. Procédé selon la revendication 8, **caractérisé en ce que** le déchargement des couches (16) s'effectue dans une succession prédéfinie, de telle sorte qu'en commençant à chaque fois avec la palette de désempilage (4) la plus éloignée de l'installation de coupe (1), les palettes de désempilage (5 à 7) soient chargées successivement avec une couche respective et qu'ensuite ce cycle de déchargement soit répété aussi souvent que requis.

10. Procédé selon la revendication 8, **caractérisé en ce que** le déchargement des couches (16) s'effectue dans au moins une des palettes de désempilage (4 à 7) .
